Europäisches Patentamt

European Patent Office

Office européen des brevets

(19)

(11) Veröffentlichungsnummer : **0 561 521 A1**

(12) **EUROPÄISCHE PATENTANMELDUNG**

(21) Anmeldenummer : 93301530.7

(22) Anmeldetag : 01.03.93

(51) Int. Cl.⁵ : **C01B 17/58, C01B 17/04**

(30) Priorität : **18.03.92 GB 9205877**

(43) Veröffentlichungstag der Anmeldung :
**22.09.93 Patentblatt 93/38**

(84) Benannte Vertragsstaaten :
**AT BE CH DE DK ES FR GB GR IT LI LU NL SE**

(71) Anmelder : **The BOC Group plc
Chertsey Road
Windlesham Surrey GU20 6HJ (GB)**

(72) Erfinder : **Satchell, Donald Prentice, Jr.
10 Lavina Court
Summit, New Jersey 07901 (US)**
Erfinder : **Rakszawski, John Frank
18 Briar Lane
Basking Ridge, New Jersey 07920 (US)**

(74) Vertreter : **Wickham, Michael et al
c/o Patent and Trademark Department The
BOC Group plc Chertsey Road
Windlesham Surrey GU20 6HJ (GB)**

(54) **Aufbereitung von Abfällen oder von anderem Material.**

(57) Waste sulphuric acid is dried in a drier 10 and the resulting dried acid is decomposed in a reactor 12 by contact with a volume of liquid sulphur through which oxygen is passed. The decomposition products of the sulphuric acid initially comprise water vapour and sulphur trioxide. The sulphur trioxide is reduced to sulphur dioxide by sulphur vapour. The resulting mixture comprising sulphur, sulphur dioxide and water vapour has sulphur condensed therefrom. The sulphur dioxide content of the gas mixture is reacted with hydrogen sulphide in a Claus plant 14 to form a sulphur product. Alternatively the mixture containing sulphur vapour can be reacted with a hydrocarbon such as methane to form hydrogen sulphide and carbon disulphide which in turn are reacted with the sulphur dioxide to form the sulphur product.

FIG.1

EP 0 561 521 A1

Jouve, 18, rue Saint-Denis, 75001 PARIS

This invention relates to the treatment of waste or other material comprising sulphuric acid.

It is well known that sulphuric acid can be recovered from waste sulphuric acid. UK patent specification No 1 288 851 discloses a process in which spent sulphuric acid is atomised and is directed into a flame which is formed by burning a fuel using oxygen to support combustion. The resulting sulphur dioxide may then be used in the production of fresh sulphuric acid by the contact process. UK patent specification No 1 602 621 discloses a process in which a mixture of spent sulphuric acid and a liquid hydrocarbon fuel is atomised by a first air stream, and a secondary air stream, enriched in oxygen, is used to burn the fuel and thus generate the necessary temperature for the thermal cracking of the sulphuric acid to produce a gas stream containing sulphur dioxide from which a fresh sulphuric acid can be prepared. UK patent specification No 1 092 171 discloses a process for the thermal decomposition of waste sulphuric acid into sulphur dioxide and water vapour, wherein the thermal energy is supplied by an exothermic auxiliary chemical reaction, comprising mixing the sulphuric acid with the stoichiometric amount of a carbonaceous fuel, feeding the mixture in an atomised form together with an at least stoichiometric amount of a free oxygen-containing gas into a combustion chamber, the atomised mixture being burnt under high turbulence at a temperature of from 650 to 1000°C, and the residence time of the mixture as well as of the reaction products formed therefrom in the combustion zone within the chamber being less than 1 second. If sulphuric acid of low concentration is to be decomposed and/or decomposition gases with a high sulphur dioxide content are to be produced the carbon-containing fuel can be partially replaced by sulphur. In this case liquid sulphur is injected, preferably with heated air, into the combustion zone and preferably in a flow direction opposite to the flow direction of the other reactants. The resulting sulphur dioxide may be converted to sulphuric acid.

All these proposals share the same disadvantage: the regeneration of sulphuric acid from a source of spent acid is economically unattractive in that it is difficult to obtain a source of spent acid at a sufficient rate and of a composition such that fresh sulphuric acid can be produced cheaply and in sufficient quantity to be attractive.

It has also been proposed in European patent application 195 447A to improve a process for recovering sulphur from a feed gas having a substantial hydrogen sulphide content (i.e. more than 60% by volume) wherein the gas stream is partially combusted with an oxygen-enriched oxidant gas in a Claus reaction furnace zone, a combustion effluent is cooled with the attendant condensation and separation of sulphur in a condensation zone and the remaining effluent stream is further treated by introducing a temperature moderating stream of sulphuric acid into the reaction furnace zone to moderate the temperature of the oxygen enriched furnace zone. A greater degree of enrichment of the oxidant gas is thereby made possible without there being any attendant damage to the Claus reaction furnace zone. The preferred source of sulphuric acid is spent acid sludge from a sulphuric acid alkylation process. The improvement thereby provides the means for disposing of such sulphuric acid sludge.

It has further been proposed in European patent application 220 610A to substitute liquid sulphur for the sulphuric acid used in the process disclosed in European patent application 195 447A. In this process the liquid sulphur is used purely as a temperature moderator and does not change the requirement to form sulphur dioxide.

According to the present invention there is provided a method of treating sulphuric acid comprising decomposing the sulphuric acid in the presence of fluid sulphur and oxygen to form a gaseous mixture comprising sulphur vapour, water vapour and sulphur dioxide, and then reacting the sulphur dioxide in the gaseous mixture with a reducing agent to form a sulphur product.

The invention also provides apparatus for treating sulphuric acid comprising a first reactor for decomposing the sulphuric acid in the presence of fluid sulphur and oxygen to form a gas mixture comprising sulphur vapour, water vapour and sulphur dioxide, said first reactor having an inlet or inlets for the sulphur and sulphuric acid, and having an outlet for said gaseous mixture, and a second reactor for reacting the sulphur dioxide in the gaseous mixture with a reducing agent to form a sulphur product, said second reactor having an inlet communicating with the said outlet of the first reactor, a inlet for reducing agent or precursor(s) thereof, and an outlet for the sulphur product.

The method and apparatus according to the invention are particularly suited to the treatment of waste sulphuric acid. The primary advantages offered by the method according to the invention are those of thermal efficiency and flexibility.

Sulphur in effect catalyses the thermal decomposition of sulphuric acid thus making possible the use of relatively low decomposition temperatures depending upon the impurities present in the sulphuric acid. In addition, heat for the decomposition of the sulphuric acid can be provided by the reaction between sulphur and oxygen to form sulphur dioxide. The resulting sulphur dioxide enters the said gaseous mixture. The key reactions that go to form the gaseous mixture therefore comprise:

$$2 H_2SO_4 \rightarrow 2H_2O + 2SO_3 \quad 1$$
$$O_2 + S \rightarrow SO_2 \quad 2$$

EP 0 561 521 A1

$$2SO3 + S \rightarrow 3SO_2 \quad 3$$

The sulphur which takes part in reaction three may exist in one of a number of tautomeric molecular species, e.g. $S_2$, $S_6$ and $S_8$ though the dimeric form generally predominates. Reactions 1 and 3 are endothermic whereas reaction 2 is exothermic. Accordingly, it is possible for all the thermal requirements for the decomposition of sulphuric acid to be provided by the reaction between sulphur and oxygen, although if desired an external source of heat may be additionally used (particularly when commencing operation of the method according to the invention). There is thus considerable flexibility in operating these reactions so that they may be a net importer or exporter of heat, and widely differing relative proportions of sulphur dioxide and sulphur may be obtained in the resulting gas mixture.

The method and apparatus according to the invention also offer flexibility in that they can produce one or both of a sulphur product and a product gas mixture comprising sulphur dioxide suitable for conversion to fresh sulphuric acid.

There is preferably an appreciable stoichiometric excess of sulphur vapour over oxygen. Typically, the amount of sulphur present during the decomposition of the sulphuric acid is at least 150% of the amount required for reaction with oxygen in accordance with equation 2 above.

The source of oxygen may be any gas mixture comprising molecular oxygen and one or more gases that do not react with sulphur or sulphur dioxide, for example nitrogen and the noble gases. Oxygen-enriched air is a preferred source of the oxygen. Alternatively, pure oxygen may be employed.

The decomposition of sulphuric acid may take place at any temperature within a range whose lower limit is defined by the boiling point of the sulphur at the prevailing pressure and whose upper limit is 1500°C depending on the impurities present in the sulphuric acid. The reaction may take place in a region in which no visible flame is present, or one in which there is a visible flame in which the sulphur burns. The choice of the reaction temperature typically depends on the composition of the waste sulphuric acid. At lower temperatures within the aforesaid range, some impurities which may be present in the waste sulphuric acid give rise to gaseous products which if not destroyed in a downstream region can condense as a solid at lower temperatures thus causing operating difficulties. For example, at temperatures in the order of 500°C ammonium sulphate decomposes by one mechanism to form ammonium bisulphate which is a vapour at 500°C but which condenses at lower temperatures. Accordingly, the reaction temperature needs to be sufficiently high for the ammonium bisulphate to decompose into gaseous products (e.g. at a temperature of at least 1000°C) or its decomposition needs to be performed in a downstream catalytic region.

The sulphuric acid is typically decomposed in a flame zone into which sulphur, sulphuric acid and oxygen are fed and in which reactions 1 to 3 identified above takes place. The sulphuric acid is typically atomised upstream of its introduction into the flame zone. Typical operating temperatures are in the range of 600 to 1,000°C. At such temperatures make combustion of sulphur is autogenous and therefore no ignition source is needed. If desired, the reactor in which the combustion takes place can be pre-heated to a temperature typically in the range of 400 to 425°C.

Where the composition of the waste sulphuric acid permits, the decomposition of the sulphuric acid may take place in a flameless reaction region. The flameless reaction region may be in the same vessel as a bath of boiling sulphur or in a vessel communicating with another vessel in which a volume of boiling liquid sulphur is held. Preferably, the oxygen is passed into the volume of liquid sulphur and reacts therewith to form sulphur dioxide. The heat of reaction is typically sufficient to maintain the liquid sulphur at or above its boiling point without the need to provide external heating. The oxygen is preferably introduced into the sulphur bath at high velocity to promote interfacial contact between the gas and the liquid. If desired, mechanical agitation may be used to enhance this contact.

Where the decomposition of sulphuric acid takes place in the same vessel as that in which the volume of liquid sulphur is maintained, the sulphuric acid is preferably introduced onto the surface of the liquid sulphur.

If desired, the sulphuric acid may be dried upstream of the decomposition region. Drying may, for example, be conducted by heating the sulphuric acid typically to a temperature in the range of 150 to 350°C. The heating may be effected by passing fluid sulphur through a heating coil immersed in a volume of waste sulphuric acid to be dried.

The method according to the present invention typically additionally includes the step of separating solids from the sulphuric acid. Separation may be performed upstream of, in or downstream of the region where the decomposition of the sulphuric acid takes place. Preferably, separation takes place by causing such solids to enter a volume of liquid sulphur. Thus, the sulphuric acid or a gaseous stream of its decomposition products may be intimately contacted with liquid sulphur. If the decomposition of the sulphuric acid takes place in a vessel in which a volume of liquid sulphur is maintained, then that volume will function as the solids separator. If, however, the decomposition of sulphuric acid takes place in a flame zone, then a volume or bath of liquid sulphur is preferably employed downstream of the flame zone in order to effect the separation of the solids.

3

The reducing agent preferably comprises one or more products of a reaction between sulphur vapour and hydrocarbon. Accordingly, a gaseous or vaporous hydrocarbon may be added to the said gaseous mixture produced by the decomposition of the sulphuric acid, and the hydrocarbon then reacted catalytically with sulphur vapour to form a mixture of hydrogen sulphide and carbon disulphide. The hydrogen sulphide and carbon disulphide so formed reduce sulphur dioxide in the gaseous mixture to sulphur. If desired, the proportion of sulphur dioxide in the gaseous mixture may be increased by introducing oxygen into the gaseous mixture intermediate the sulphuric acid decomposition region and the reduction region whereby the oxygen reacts with sulphur vapour to form sulphur dioxide. If removal of particulates from the gaseous mixture is performed by means of a volume of liquid sulphur this reaction between the oxygen and the sulphur vapour may be used to raise the temperature of the gaseous mixture to a suitable value for the reduction reaction or reactions. Preferably, a plurality of catalytic regions are employed to carry out the reduction reaction or reactions. The gaseous mixture is preferably cooled between regions by the introduction of-with liquid sulphur.

The catalytic reactions are preferably performed at temperatures in the range of 600 to 800°C. At such temperatures, the Claus reaction between hydrogen sulphide and sulphur dioxide does not approach completion. In order to separate sulphur vapour and complete the reaction between hydrogen sulphide and sulphur dioxide, the gaseous mixture is, downstream of the catalytic region or regions, preferably contacted with an aqueous medium at a temperature in the range of 110 to 140°C and condense sulphur vapour, while minimising the dissolution of sulphur dioxide. The aqueous medium preferably includes ethylene glycol or other additive effective to raise its boiling point above the temperature at which it is contacted with the gaseous mixture.

In alternative reaction schemes, the reaction with the reducing agent may be carried out without the aid of a catalyst and/or solely with hydrogen sulphide from an external source thereof. Accordingly, if desired, the reaction of the sulphur dioxide with the reducing agent may take place as a conventional Claus process.

It is preferred that the rate of formation of sulphur by the reduction reaction is sufficient to meet all the sulphur requirements of the method according to the invention. If desired, additional sulphur for use outside the method according to the invention may be produced.

In some examples of the method according to the invention, substantially all the sulphur dioxide content of the gas mixture is reduced to sulphur. After separation of the sulphur, residual sulphur containing gases may be removed in a conventional tail gas clean up process such as the SCOT process. In other examples, sulphur dioxide is formed as an end-product which is able to be converted to sulphuric acid by known process routes.

Methods and apparatuses according to the present invention will now be described by way of example with reference to the accompanying drawings, in which:

Figure 1 is a flow diagram of a first apparatus for treating waste sulphuric acid;

Figure 2 is a flow diagram schematically illustrating a Claus plant suitable for use as part of the apparatus shown in Figure 1.

Figure 3 is a schematic diagram illustrating a first alternative embodiment of a sulphuric acid decomposition reactor for use in the apparatus shown in Figure 1;

Figure 4 is a schematic diagram illustrating a second alternative embodiment of a sulphuric acid decomposition reactor for use in the apparatus shown in Figure 1; and

Figure 5 is a flow diagram schematically illustrating second plant for decomposing sulphuric acid in accordance with the invention.

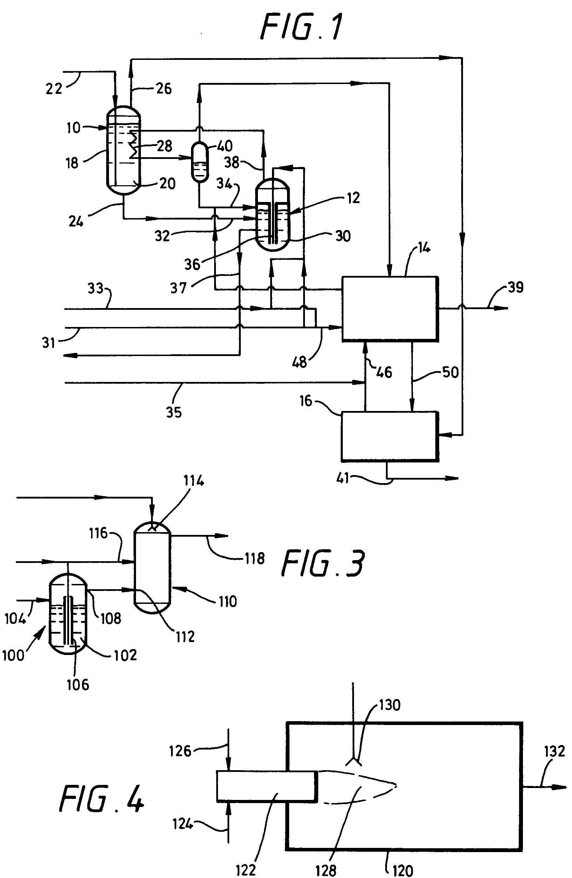

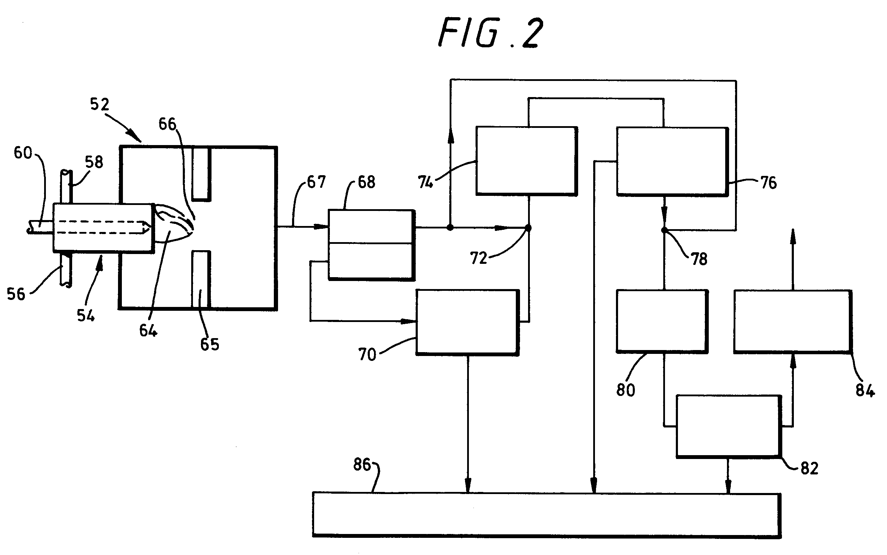

Referring to Figure 1, the illustrated plant comprises a drier 10 for drying waste sulphuric acid; a sulphuric acid decomposition reactor 12, a Claus plant 14 for treating the gas mixture produced by the decomposition reactor 12 and a SCOT plant 16 for treating the tail gas from the Claus plant so as to form an effluent gas which can be discharged to the atmosphere. The sulphuric acid drier 10 comprises a closed columnar vessel 18 containing a volume 20 of the waste sulphuric acid. The vessel 18 has associated therewith an inlet pipeline 22 for a source of waste sulphuric acid, which pipeline 22 terminates either above or beneath the surface of the volume 20 of the waste sulphuric acid.

The volume 20 of waste sulphuric acid in the vessel 18 is heated by operation of a heating coil 28 immersed therein. Fluid sulphur, typically in the gaseous state, is passed continuously through the coil 28 typically at a temperature of about 340°C, and waste sulphuric acid is fed continuously to the drier 10.

A vapour stream consisting essentially of steam is continuously withdrawn from the vessel 18 through an outlet 26 at the top of the vessel. Dried waste sulphuric acid is continuously withdrawn through an outlet 24 at the bottom of the vessel 18.

The decomposition reactor 12 comprises a closed columnar vessel 30 which has inlets 32, 34 and 36 for dried sulphuric acid, liquid sulphur and oxygen-enriched air respectively. A chosen volume (typically up to 6 metres deep) of liquid sulphur is maintained in the vessel 30. A stream of oxygen-enriched air typically containing between 30 and 95% by volume of oxygen is continuously introduced into the bottom of the volume of liquid sulphur in the vessel 30 at a high velocity to provide a high interfacial area of contact between the oxygen and the liquid sulphur. The stream is formed by mixing air taken from a pipeline 31 with oxygen taken from a pipeline 33. If desired, mechanical agitation can be used to enhance the interfacial contact. The oxygen reacts with the liquid sulphur to form sulphur dioxide in accordance with the reaction:

$$S + O_2 \text{ -> } SO_2$$

Essentially all the oxygen entering the vessel 30 is so oxidised to sulphur dioxide. Since this reaction is exothermic, it heats the liquid sulphur in the vessel and causes sulphur to vaporise.

A stream of dried sulphuric acid continuously withdrawn from the drier 10 is continuously introduced into the vessel 30 through the inlet 32 and comes into contact with the liquid sulphur which is maintained at a temperature in the range 450 to 510°C. (It is an advantage of the plant shown in Figure 1 that the temperatures in the reactor 12 are sufficiently low to allow the vessel 30 to be fabricated from mild steel.) At the temperature of the reactor 12, sulphuric acid rapidly disproportionates in accordance with the reaction:

$$H_2SO_4 \text{ -> } H_2O + SO_3$$

The sulphur trioxide then reacts in the vapour phase with sulphur to form sulphur dioxide:

$$2SO_3 + S \text{ (g) -> } 3SO_2$$

Thus, the sulphuric acid is decomposed into a vapour mixture comprising steam and sulphur dioxide. A stream of resultant gas mixture is continuously withdrawn from the reactor 30 through the outlet 38 and typically comprises sulphur dioxide, water vapour, sulphur vapour and nitrogen and may include up to 50 volumes per million of oxygen. It is the stream leaving the vessel 30 through the outlet 38 that is used to heat the liquid sulphur in the drier 10. This stream is therefore passed through the heat exchange coil 28 to effect this heating. Most of the sulphur vapour in the stream is thereby condensed and the resulting gas mixture now containing entrained droplets of liquid sulphur is passed into a phase separator 40 where it is separated into a gas phase comprising nitrogen, sulphur dioxide, water vapour and uncondensed sulphur vapour and a liquid phase comprising sulphur. A stream of the liquid phase is typically recycled to the vessel 30.

The source of the sulphuric acid may be a plant which employs sulphuric acid as a catalyst in an alkylation reaction or a plant which makes titanium oxide by the sulphate route. As such, the sulphuric acid typically contains organic and/or inorganic impurities, sometimes in quite large quantities. Oxides such as silica and dissolved or precipitated salts such as sodium sulphate and sodium chloride in the sulphuric acid feed tend to accumulate in the volume of liquid sulphur in the vessel 30. Such solids are periodically removed from the reactor 12 in the form of a liquid sulphur slurry through an outlet pipeline 37. They may then be recovered by boiling the sulphur slurry in another vessel (not shown) to produce a sulphur vapour stream with minimum entrainment of particulate solids in the vapour. If desired, a fluxing agent such as lime may be added to the slurry so as to form a slag. If necessary, a second purification stage can be performed by condensing and reboiling the sulphur vapour.

A stream of the gaseous phase is withdrawn continuously from the phase separator 40 and is then fed to the Claus plant 14 in which the sulphur dioxide is converted to sulphur by the Claus reaction. The sulphur product is withdrawn from the Claus plant 4 through outlet 39. The Claus plant 14 also has inlets 46 and 48 for hydrogen sulphide and oxygen-enriched air respectively. The hydrogen sulphide is taken from a pipeline 35. The oxygen-enriched air is formed by mixing air taken from a pipeline 31 with oxygen taken from a pipeline 33. A tail gas containing less than 5% by volume of sulphur compounds leaves the Claus plant 14 through an outlet 50 and is further treated in the Scot plant 16 in which it is reacted with a reducing gas to form hydrogen sulphide which is recycled to the Claus plant. The off-gas from the Scot plant 16 is vented through outlet 41 and typically contains less than 1000 vpm of sulphur and sulphur compounds. If the stream of steam leaving the drier 10 through the outlet 26 is free of organics, it may be introduced into the hydrolysis reactor (not shown) of the Scot plant 16. Any nitric acid in this stream is reduced to nitrogen and water vapour in the hydrolysis reactor. Any hydrochloric acid in the stream may be absorbed and neutralised in a water wash step (not shown) prior to an amine absorption step (not shown) performed by the Scot plant 16.

A suitable Claus plant 14 for use in the plant shown in Figure 1 is illustrated in Figure 2 of the drawings. Referring to Figure 2, a furnace 52 for conducting the Claus reaction is fitted at its upstream end with a burner 54 having an inlet 56 for feed gas containing hydrogen sulphide and an inlet 58 for oxygen-enriched air. The hydrogen sulphide feed stream is typically relatively concentrated, containing at least 70% by volume of hydrogen sulphide and hydrocarbons. It may also include other gases, for example, carbon dioxide, hydrogen and argon.

The burner 54 also has an inlet 60 for the stream of gas mixture that is withdrawn from the phase separator 40 of the plant shown in Figure 1 of the drawing. The rate of supply of oxygen-enriched air in relation to the rates of supply of the hydrogen sulphide feed stream and the gas stream from the phase separator 40 shown in Figure 1 is such that any combustibles other than hydrogen sulphide in the hydrogen sulphide feed stream that react preferentially with oxygen are fully oxidised and that the proportion of hydrogen sulphide that is burnt yields a ratio of hydrogen sulphide to sulphur dioxide in the resulting combustion products of approximately 2:1. Since the decomposed sulphuric acid provides some sulphur dioxide for the Claus reaction, the hydrogen sulphide feed stream is not used as the ultimate source of all the sulphur dioxide for the Claus reaction and therefore a smaller proportion of the hydrogen sulphide needs to be burned than when the hydrogen sulphide is the only source of sulphur dioxide. Accordingly, less heat is generated per mole of hydrogen sulphide fed to the furnace 52. The productivity of the furnace 52 can thus be maximised by selecting a relatively high concentration of oxygen for the oxygen-enriched air stream and a relatively high throughput of hydrogen sulphide without creating an excessive temperature likely to damage the refractory of the furnace 52. Typically, the maximum temperature tolerable is in the order of 1600°C.

The furnace 52 is typically substantially identical to a conventional Claus furnace. Accordingly, the furnace has a suitable refractory lining (not shown) and a volume sufficient for there to be a thermal reaction zone 66 contiguous with a combustion zone 64. (in addition the furnace 52 may be provided with a baffle 65.) Reaction between hydrogen sulphide and sulphur dioxide is initiated in the combustion zone 64 and continues in the thermal reaction zone 66. The thermal reaction between hydrogen sulphide and sulphur dioxide is endothermic and temperature drop takes place in the thermal reaction zone 66. Accordingly, the gas typically falls in temperature from about say 1350°C in the combustion zone 64 to say 1200 to 1250°C at an exit 67 from the furnace 52. The effluent gas stream is cooled in a waste heat boiler or heat exchanger 68 to a temperature of, say, 275 to 325°C. The waste heat boiler (or heat exchanger) 68 typically has two passes for the effluent gas stream. A major portion of the effluent gas stream flows through both passes and is thus cooled to the chosen temperature of from 275 to 325°C while a minor portion of the effluent gas stream flows through only the first pass and leaves the waste heat boiler 68 at a higher temperature, typically in the range 590 to 600°C and is used as will be described below.

The major portion of the effluent gas stream then enters a first sulphur condenser 70 in which sulphur vapour formed by the reaction between sulphur dioxide and hydrogen sulphide is condensed out of the effluent gas stream from the furnace 52 by cooling the gas stream to 140°C. Such sulphur condensate is then passed into a sulphur seal pit.

Downstream of the first condenser 70, the effluent gas stream consisting essentially of hydrogen sulphide, sulphur dioxide, water vapour and any nitrogen and carbon dioxide introduced into the furnace 52 with the feed gas streams, is reheated at a region 72 to a temperature in the order of 220 to 250°C by being mixed with the first stream taken from said minor portion of the effluent gases. Reaction takes place between the residual hydrogen sulphide and sulphur dioxide to form more sulphur vapour and water vapour. This reaction takes place over a catalyst which is typically of a conventional kind, for example, activated alumina, in a catalytic reactor 74. Since the catalytic reaction is exothermic, there is a rise in temperature in the first catalytic reactor 74 and accordingly the gas mixture leaving this reactor typically has a temperature in the order of 300 to 350°C. If desired, the outlet temperature of the reactor 74 may be arranged to be higher, say in the range 350 to 400°C (e.g. 375°C). Such higher outlet temperature tends to give improved hydrolysis of any carbon oxysulphide and carbon disulphide in the gas mixture.

From the catalytic reactor 74 the effluent gas stream passes through a second sulphur condenser 76 in which sulphur is condensed out of the gas mixture. Part of the resultance of the condensate is passed to a sulphur seal pit 86 while the remainder is recycled to a sulphuric acid decomposition reactor of the kind shown in Figure 1.

Downstream of the sulphur condenser 76 the effluent gas mixture is reheated at a region 78 from a temperature of, say, 140°C to a temperature slightly less than the inlet temperature to the first catalytic reactor 74, say, in the range 200 to 220°C. The reheating is typically effected by taking a portion of that part of the effluent gas stream leaving the waste heat boiler 68 which flows from the downstream end of the waste heat boiler 68 to the region 72 and mixing it with the effluent gas from the second sulphur condenser 76. The resulting gas mixture then passes through a second catalytic reactor 80 where further reaction between residual hydrogen sulphide and residual sulphur dioxide takes place to form water vapour and sulphur vapour with the evolution of heat such that the temperature of the gas mixture is typically raised in the order of 50°C as it passes from the inlet to the outlet of the second catalytic reactor 80. The catalyst employed in the second catalytic reactor 80 is typically the same as that employed in the first such reactor 74.

Downstream of the second catalytic reactor 80, the gas mixture passes through a third sulphur condenser 82 in which sulphur is condensed out of the gas stream. The condensed sulphur is passed to the sulphur seal pit 86. The gas stream leaving the sulphur condenser 82 may then be passed to a conventional "tail gas clean-up plant" (not shown) which may be a SCOT plant as shown in Figure 1 or alternatively may be a plant for operating the Stretford or Beavon process.

Referring now to Figure 3 of the accompanying drawings, there is shown an alternative embodiment of a sulphuric acid decomposition reactor for use in the plant shown in Figure 1. The main difference between the reactor shown in Figure 3 and that shown in Figure 1, is that the vapour phase reaction between sulphur and sulphuric acid takes place in a different vessel from the one in which the liquid sulphur is boiled. Such a procedure is advantageous if impurities in the sulphuric acid are of a nature such as to cause foaming were the acid to be introduced into a bath of liquid sulphur. Referring to Figure 3, a volume 102 of liquid sulphur is maintained in a vessel 100 at a temperature at or close to its boiling point. Liquid sulphur is continuously introduced into the vessel 100 through an inlet 104. Oxygen-enriched air or pure oxygen is introduced into the bottom of the volume 102 of liquid sulphur in the vessel 100 through an inlet 106 at a high velocity to provide a high interfacial area of contact between the gaseous oxygen and the liquid sulphur. If desired, mechanical agitation may be used to enhance interfacial contact between the oxygen and the liquid sulphur. The oxygen reacts with the liquid sulphur to form sulphur dioxide. Essentially all the oxygen entering the vessel 100 takes part in this oxidation reaction. Since the reaction is exothermic, the liquid sulphur in the vessel is heated and thereby maintained at about its boiling point. Accordingly, some of the liquid sulphur vaporises. A stream of a mixture of sulphur dioxide and sulphur vapour which includes any non-reactive gases introduced into the vessel 100 with the oxygen is continuously withdrawn from the vessel 100 through an outlet 108 and enters a second columnar vessel 110 through an inlet 112. Spent sulphuric acid is introduced into the top of the vessel 110 through an inlet 114 which comprises one or more atomising nozzles. Accordingly, the sulphuric acid is dispersed within the vessel 110 in the form of a fine spray which rapidly vaporises. The vessel 110 also has an inlet 116 through which a stream of oxygen-enriched air or pure oxygen is continuously introduced.

The interior of the vessel 110 is typically maintained in a temperature in the range of 450 to 900°C. At such temperatures the sulphuric acid rapidly disproportionates in accordance with the reaction:

$$H_2SO_4 -> H_2O + SO_3$$

The resulting sulphur trioxide then reacts in the vapour phase with sulphur to form sulphur-dioxide:

$$2SO_3 + S -> 3SO_2.$$

In addition, the sulphur vapour reacts exothermically with oxygen in the vessel 110 to form sulphur dioxide in accordance with the equation:

$$S + O_2 -> SO_2.$$

Since the reaction between sulphur vapour and oxygen is exothermic, the temperatures in the vessels 100 and 110 can typically be maintained at a chosen values without having to provide any external heating (except at start up).

A gas mixture comprising sulphur dioxide and sulphur vapour is continuously withdrawn from the vessel 110 through an outlet 118 and may then be subjected to a reaction with a reducing agent comprising hydrogen sulphide in accordance with the invention. If desired, some or all of the sulphur vapour may be condensed from the stream withdrawn through the outlet 118 upstream of the reaction with the reducing agent.

It is not essential for the decomposition of the sulphuric acid to take place in a flameless reaction region (as takes place in operation of the plants shown in Figures 1 and 3). An apparatus in which the decomposition takes place within a flame is illustrated schematically in Figure 4 of the accompanying drawings. The decomposition reactor shown in Figure 4 comprises a furnace 120 having a refractory lining (not shown). The furnace is provided with a burner 122 having an inlet of 124 for a stream of sulphur, which may be supplied in vapour or liquid state, and an inlet 126 for a stream of pure oxygen or oxygen-enriched air. The sulphur is preferably fed to the burner 122 at a temperature above its ignition temperature of 260°C. No ignition source is required with such a liquid sulphur feed provided the interior of the furnace is initially pre-heated to a temperature greater than about 425°C. The sulphur burns in a flame zone 128 with the formation of sulphur dioxide. The furnace 120 is also provided with an inlet 130 for sulphuric acid. There are a number of methods well known in the art for effectively introducing sulphuric acid into a flame zone so as to effect its decomposition. For example, the sulphuric acid may be introduced into the flame zone through one or more atomisers (not shown) which direct a spray or mist of sulphuric acid into the flame zone. The sulphuric acid is decomposed in the flame zone 128 to water vapour and sulphur trioxide. The sulphur trioxide is then reduced by sulphur vapour to form sulphur dioxide. This reaction proceeds rapidly at temperatures above 400°C. The relative rates of supplying sulphur, oxygen and sulphuric acid to the flame zone 128 are preferably selected so that the gas mixture including combustion products leaving the flame zone 128 contains unreacted sulphur, i.e. there is a stoichiometric excess of sulphur relative to oxygen. The gases leave the flame zone 128 of the furnace 120 through an outlet 132 typically at a temperature in the range 500 to 1500°C. The flame temperature is selected so as to ensure the decomposition of substances that are gaseous at ambient temperature, say, 20°C, of any vapours of substances that are normally solids. For example, ammonium sulphate present in the waste sulphuric acid decomposes by one mechanism to ammonium bisulphate which has a melting point of about 147°C and a boiling point of 490°C. The flame temperature is thus chosen to be sufficiently above 490°C to ensure that such ammonium bisulphate decomposes in the flame zone to gaseous products.

If the waste sulphuric acid includes organic impurities, for example alkanes, these compounds are oxidised in the flame zone to carbon dioxide and water vapour in accordance with the formula:

$$C_nH_{2n+2} + \frac{(3n+1)}{2} O_2 - nCO_2 + (n+1) H_2O$$

In addition, the hydrocarbons may also react with sulphur vapour to form carbon disulphide and hydrogen sulphide which in turn react with sulphur dioxide to form sulphur vapour, carbon dioxide and water vapour; and with oxygen to form carbon dioxide, water vapour and sulphur dioxide.

In the event that coke or other form of elemental carbon is produced by thermal cracking of the hydrocarbons, the temperature in the furnace is desirably sufficiently high to remove the coke by the reaction:

$$S_2 (g) + C(s) \rightarrow CS_2$$

Alternatively, the furnace temperature can be periodically raised to decoke the furnace.

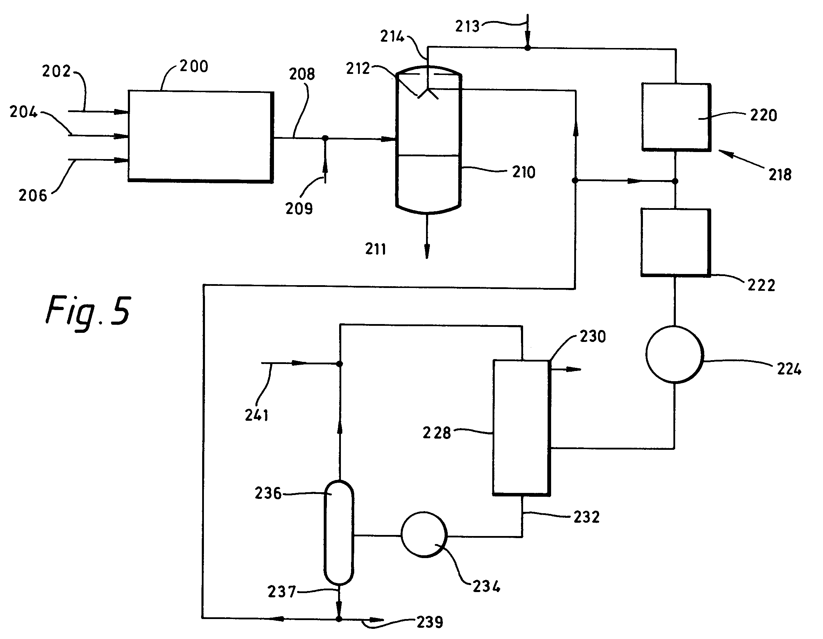

Referring to Figure 5 of the drawings, there is shown a reaction furnace 200 for the decomposition of sulphuric acid. The reaction furnace has inlets 202, 204 and 206 for waste sulphuric acid, oxygen-enriched air and liquid sulphur respectively. The construction and operation of the reactor 200 may be the same as that of the furnace 120 illustrated in Figure 4 of the accompanying drawings. Accordingly, a gas mixture consisting essentially of nitrogen, carbon dioxide, water vapour, sulphur vapour and sulphur dioxide leaves the furnace 200 through an outlet 208. The gas mixture may also contain any unreacted hydrocarbons that have passed through the furnace 200. In addition, the gas mixture may contain particulates (for example inorganic oxides and inorganic salts). The gas mixture leaving the furnace 200 through the outlet 208 is mixed with a stream of methane or other alkane supplied from a pipeline 209 and is then introduced into a sulphur scrubber vessel 210 in which the gas mixture is intimately contacted with liquid sulphur. Liquid sulphur is sprayed into the vessel 210 through nozzles 212 at its dew point at the prevailing pressure (typically this dew point is in the order of 380°C). Solid inorganic compounds such as silica, sodium sulphate, and sodium chloride present in particulate form in the gas mixture accumulate in a volume of liquid sulphur maintained in the vessel 210 and may be withdrawn therefrom through an outlet 211. The resulting contaminated sulphur may be continuously recirculated to the furnace 200 with, preferably, the addition thereto of a suitable fluxing ingredient such that there is produced in the furnace 200 a slag which can from time to time be tapped off therefrom. The scrubber vessel 210 thus provides a particularly effective means of removing particulates from the gaseous decomposition products of the sulphuric acid.

A resultant gas mixture free of particulates leaves the scrubber vessel 210 through an outlet 214 at its top and is mixed with a stream of oxygen-enriched air supplied from a pipe 213. Reaction between oxygen and sulphur vapour takes place in the gas mixture so as to raise its temperature to a desired value suitable for catalytic reaction between methane and sulphur vapour to form carbon disulphide and hydrogen sulphide. Accordingly, the rate of addition of oxygen-enriched air is selected so as to give a desired temperature increase in the gas mixture. The gas mixture then enters the first stage 220 of a two stage catalytic reactor 218. The inlet temperature for the first stage is typically in the range of 500 to 800°C. The catalyst may typically be selected from charcoal, chromium, tungsten, molybdenum, magnesium oxide, silica gel and alumina gel. Methane (and any other alkane) in the gas mixture reacts with the sulphur vapour over the catalyst form carbon disulphide and hydrogen sulphide. The resulting sulphur dioxide and hydrogen sulphide then react with sulphur dioxide to form sulphur vapour. The chemical reactions involved are set out below.

$$CH_4 (g) + 2S_2 (g) \rightarrow 2CS_2 (g) + 2H_2S (g)$$
$$2SO_2 (g) + 2CS_2 (g) \rightarrow 2CO_2 (g) + 3S_2 (g)$$
$$2SO_2 (g) + 4H_2S (g) \rightarrow 4H_2O (g) + 3S_2 (g)$$

These reactions take place with a net evolution of heat. The amount of catalyst provided, therefore, in the first stage is chosen such that the gas mixture leaving the first stage 218 is not at so high a temperature that the catalyst is sintered or otherwise damaged.

The gas mixture leaving the first stage 220 of the reactor 218 is reduced in temperature upstream of the inlet to the second stage 222 of the reactor 218. The reduction in temperature is preferably effected by mixing the gas mixture with a stream of fluid sulphur, typically in the liquid state, from another part of the process. The gas mixture is typically thus reduced in temperature to the same temperature at which it enters the first stage 220 of the reactor 218. The gas mixture flows into the second stage 222 of the reactor 218 and the same reactions as take place in the first stage occur. A gas mixture substantially free of hydrocarbons and carbon disulphide but still containing hydrogen sulphide leaves the second stage 222 of the reactor 218 and is then cooled in a heat exchanger or waste heat boiler 224 to a temperature of about 170°C, that is the temperature at which the viscosity of sulphur is at a minimum.

The thus-cooled gas mixture is then fed into a packed liquid-vapour contact column 228. The column 228 performs two main functions: first, it enables residual hydrogen sulphide to be substantially entirely consumed by reaction with sulphur dioxide to form sulphur and water; second it acts as a sulphur condenser. In the column 228, an ascending gas phase is intimately contacted with a descending liquid phase comprising an aqueous medium at a temperature of about 120°C. The aqueous medium typically comprises a solution of ethylene glycol and water. Typically, the solution contains at least 95% by weight of ethylene glycol. The addition of such ethylene glycol ensures that a temperature at which the sulphur can condense and be relatively non-viscous is maintained in the column 228. A gas mixture essentially free of sulphur vapour and hydrogen sulphide then leaves the top of the column 228 through the outlet 230 at a temperature in the order of 120°C. A liquid phase comprising water, ethylene glycol and condensed sulphur vapour is withdrawn from the bottom of the column 228 through an outlet 232, and is then cooled in a heat exchanger 234 and the resultant cooled liquid passed into a separator 236 at a temperature of about 120°C and separated therein, by virtue of the difference in specific gravity between liquid sulphur and water, into a lower layer of liquid sulphur and an upper layer of aqueous medium including dissolved ethylene glycol. The liquid sulphur is withdrawn from the bottom of the separator 236 through an outlet 237 and is used to provide the coolant for the catalytic reactor 218 and the liquid sulphur feed for the scrubber vessel 210. Any excess liquid sulphur may be taken as a separate product via an outlet 239. The aqueous medium is recycled from the separator 236 to the top of the column 228 being mixed with make up aqueous medium comprising water and ethylene glycol from an inlet pipe 241.

In comparison with the operation of the plant shown in Figure 1, that shown in Figure 5 consumes less oxygen for a given throughput of waste sulphuric acid and conducts the reduction of sulphur dioxide generated from the waste sulphuric acid at a lower temperature.

One of the main advantages of the method according to the invention is the relative flexibility with which it can be operated to give varying amounts of sulphur dioxide and sulphur products. This flexibility is illustrated by the following examples of the operation of the plant shown in Figure 5 of the drawings. In each example, the letters A to P represent the following streams.

A - feed sulphuric acid to the furnace 200.
B - oxygen-enriched air feed to the furnace 200.
C - liquid sulphur feed to the furnace 200.
D - gas mixture leaving the furnace 200 through the outlet 208.
E - methane feed to the gas mixture leaving the furnace 200.
F - gas mixture fed to the scrubber 210.
G - fresh sulphur feed to the scrubber 210 (excluding recycle)
H - gas mixture leaving the scrubber 210
I - oxygen stream that is mixed with gas mixture leaving the scrubber 210.
J - feed to the catalytic reactor 218 (all oxygen assumed to be fully reacted).
K - gas mixture leaving second stage 222 of catalytic reactor 218.
L - gas mixture leaving heat exchanger 224.
M - gas mixture leaving column 228.
N - fresh aqueous feed to the column 228 (excluding recycle)
O - sulphur product (excluding recycle to other parts of the process)
P - sulphur quenchant introduced between stages 220 and 222 of the reactor 218.

In example 1 below, the streams B and I are pure oxygen, the catalytic reactor 218 employs 0.768 kg of catalyst (silica gel) per kg/hr feed of waste sulphuric acid and operates at a pressure of 0.2 bar gauge. In this example, a resulting product stream (M) comprising sulphur dioxide, water vapour, and carbon dioxide with a trace of methane is produced.

In example 2 below, the streams B and I comprise 30% by volume of oxygen and 70% by volume of nitrogen. The catalytic reactor 218 employs 2.281 kg of silica gel catalyst per kg/hr of sulphuric acid feed and operates at a pressure of 0.2 bar gauge. In this example, both a product stream M comprising sulphur dioxide and a product stream O comprising sulphur are produced.

In example 3, the streams B and I each consist of 20% by volume of oxygen and 80% by volume of nitrogen. The catalytic reactor 218 employs 4.827 kg of silica gel catalyst per kg/hr of sulphuric acid feed and operates at 0.2 bar gauge pressure. A sulphur product stream O is produced.

In example 4, the streams B and I consists solely of oxygen. The catalytic reactor 218 employs 0.833 kg of silica gel catalyst per kg/hr of waste sulphuric acid feed and operates at a pressure of 0.2 bar gauge. A sulphur product (stream O) only is produced.

In all the examples the stream N consists of water (mol fraction 0.8) and ethylene glycol (mol fraction 0.2). In addition, in each example, the reactor 218 achieves 99.9% conversion of methane.

| Example 1 | | | | | |
|---|---|---|---|---|---|
| Stream | A | B | C | D | E |
| T,°C | 25 | 25 | 382 | 800 | 25 |

Kilograms/Hr

| | F | G | H | I | J |
|---|---|---|---|---|---|
| N2 | - | - | - | - | - |
| O2 | - | 491 | - | - | - |
| CH4 | - | - | - | - | 157 |
| H2S | - | - | - | - | - |
| H2O | 26 | - | - | 247 | - |
| SO2 | - | - | - | 1,777 | - |
| H2SO4 | 1,000 | - | - | - | - |
| S | - | - | 1,273 | 711 | - |
| CO2 | - | - | - | 81 | - |
| N-C8 | 26 | - | - | - | - |
| Total | 1,052 | 491 | 1,273 | 2,816 | 157 |
| Stream | F | G | H | I | J |
| T,°C | 670 | 120 | 382 | 25 | 600 |

Kilograms/Hr

| | K | L | M | N | P |
|---|---|---|---|---|---|
| N2 | - | - | - | - | - |
| O2 | - | - | - | 65 | - |
| CH4 | 157 | - | 157 | - | 157 |
| H2S | - | - | - | - | - |
| H2O | 247 | - | 247 | - | 247 |
| SO2 | 1,777 | - | 1,777 | - | 1,907 |
| H2SO4 | - | - | - | - | - |
| S | 711 | 1,523 | 961 | - | 896 |
| CO2 | 81 | - | 81 | - | 81 |
| N-C8 | - | - | - | - | - |
| Total | 2,973 | 1,523 | 3,223 | 65 | 3,288 |
| Stream | K | L | M | N | P |
| T,°C | 750 | 175 | 120 | 25 | 120 |

Kilograms/Hr

| | | | | | |
|---|---|---|---|---|---|
| N2 | - | - | - | - | - |
| O2 | - | - | - | - | - |
| CH4 | - | - | - | - | - |
| H2S | 332 | 332 | - | - | - |
| H2O | 425 | 425 | 2,651 | 2,050 | - |

| SO2 | 965 | 965 | 653 | - | - |
| H2SO4 | - | - | - | - | - |
| S | 1,249 | 1,249 | - | - | 194 |
| CO2 | 512 | 512 | 512 | - | - |
| N-C8 | - | - | - | - | - |
| Total | 3,483 | 3,483 | 3,816 | 2,050 | 194 |

| Example 2 | | | | | |
|---|---|---|---|---|---|
| Stream | A | B | C | D | E |
| T,°C | 25 | 25 | 368 | 800 | 25 |
| Kilograms/Hr | | | | | |
| N2 | - | 1,353 | - | 1,353 | - |
| O2 | - | 663 | - | - | - |
| CH4 | - | - | - | - | 259 |
| H2S | - | - | - | - | - |
| H2O | 26 | - | - | 247 | - |
| SO2 | - | - | - | 2,121 | - |
| H2SO4 | 1,000 | - | - | - | - |
| S | - | - | 1,582 | 848 | - |
| CO2 | - | - | - | 81 | - |
| N-C8 | 26 | - | - | - | - |
| Total | 1,052 | 2,016 | 1,582 | 4,650 | 259 |
| Stream | F | G | H | I | J |
| T,°C | 676 | 120 | 368 | 25 | 600 |
| Kilograms/Hr | | | | | |
| N2 | 1,353 | - | 1,353 | 281 | 1,634 |
| O2 | - | - | - | 138 | - |
| CH4 | 259 | - | 259 | - | 259 |
| H2S | - | - | - | - | - |
| H2O | 247 | - | 247 | - | 247 |
| SO2 | 2,121 | - | 2,121 | - | 2,396 |
| H2SO4 | - | - | - | - | - |
| S | 848 | 2,166 | 1,433 | - | 1,295 |
| CO2 | 81 | - | 81 | - | 81 |

| N-C8 | - | - | - | - | - | |
| Total | 4,909 | 2,166 | 5,494 | 419 | 5,912 | |
| Stream | K | L | M | N | O | P |
| T,°C | 750 | 175 | 120 | 25 | 120 | 120 |
| Kilograms/Hr | | | | | | |
| N2 | 1,634 | 1,634 | 1,634 | - | - | - |
| O2 | - | - | - | - | - | - |
| CH4 | - | - | - | - | - | - |
| H2S | 525 | 525 | - | - | - | - |
| H2O | 552 | 552 | 9,899 | 9,069 | - | - |
| SO2 | 820 | 820 | 327 | - | - | - |
| H2SO4 | - | - | - | - | - | - |
| S | 1,856 | 1,856 | - | - | 163 | 268 |
| CO2 | 793 | 793 | 793 | - | - | - |
| N-C8 | - | - | - | - | - | - |
| Total | 6,180 | 6,180 | 12,653 | 9,069 | 163 | 268 |

| Example 3 | | | | | | |
|---|---|---|---|---|---|---|
| Stream | A | B | C | D | E | |
| T,°C | 25 | 25 | 361 | 800 | 25 | |
| Kilograms/Hr | | | | | | |
| N2 | - | 3,081 | - | 3,081 | - | |
| O2 | - | 880 | - | - | - | |
| CH4 | - | - | - | - | 380 | |
| H2S | - | - | - | - | - | |
| H2O | 26 | - | - | 247 | - | |
| SO2 | - | - | - | 2,555 | - | |
| H2SO4 | 1,000 | - | - | - | - | |
| S | - | - | 1,973 | 1,022 | - | |
| CO2 | - | - | - | 81 | - | |
| N-C8 | 26 | - | - | - | - | |
| Total | 1,052 | 3,961 | 1,973 | 6,986 | 380 | |
| Stream | F | G | H | I | J | |
| T,°C | 681 | 120 | 361 | 25 | 600 | |

| Kilograms/Hr | | | | | | |
|---|---|---|---|---|---|---|
| N2 | 3,081 | - | 3,081 | 844 | 3,925 | |
| O2 | - | - | - | 241 | - | |
| CH4 | 380 | - | 380 | - | 380 | |
| H2S | - | - | - | - | - | |
| H2O | 247 | - | 247 | - | 247 | |
| SO2 | 2,555 | - | 2,555 | - | 3,038 | |
| H2SO4 | - | - | - | - | - | |
| S | 1,022 | 2,982 | 2,031 | - | 1,790 | |
| CO2 | 81 | - | 81 | - | 81 | |
| N-C8 | - | - | - | - | - | |
| Total | 7,366 | 2,982 | 8,375 | 1,085 | 9,461 | |
| Stream | K | L | M | N | O | P |
| T,°C | 750 | 175 | 120 | 25 | 120 | 120 |
| Kilograms/Hr | | | | | | |
| N2 | 3,925 | 3,925 | 3,925 | - | - | - |
| O2 | - | - | - | - | - | - |
| CH4 | - | - | - | - | - | - |
| H2S | 775 | 775 | - | - | - | - |
| H2O | 691 | 691 | 20,102 | 19,001 | - | - |
| SO2 | 729 | 729 | - | - | - | - |
| H2SO4 | - | - | - | - | - | - |
| S | 2,545 | 2,545 | - | - | 327 | 331 |
| CO2 | 1,125 | 1,125 | 1,125 | - | - | - |
| N-C8 | - | - | - | - | - | - |
| Total | 9,790 | 9,790 | 25,152 | 19,001 | 327 | 331 |

| Example 4 | | | | | | |
|---|---|---|---|---|---|---|
| Stream | A | B | C | D | E | |
| T,°C | 25 | 25 | 377 | 800 | 25 | |
| Kilograms/Hr | | | | | | |
| N2 | | - | - | - | - | - |
| O2 | | - | 492 | - | - | - |
| CH4 | | - | - | - | - | 241 |

| | | | | | |
|---|---|---|---|---|---|
| H2S | - | - | - | - | - |
| H2O | 26 | - | - | 247 | - |
| SO2 | - | - | - | 1,779 | - |
| H2SO4 | 1,000 | - | - | - | - |
| S | - | - | 1,275 | 712 | - |
| CO2 | - | - | - | 81 | - |
| N-C8 | 26 | - | - | - | - |
| Total | 1,052 | 492 | 1,275 | 2,819 | 241 |

| Stream | F | G | H | I | J | |
|---|---|---|---|---|---|---|
| T,°C | 620 | 120 | 377 | 25 | 600 | |
| Kilograms/Hr | | | | | | |
| N2 | - | - | - | - | - | |
| O2 | - | - | - | 73 | - | |
| CH4 | 241 | - | 241 | - | 241 | |
| H2S | - | - | - | - | - | |
| H2O | 247 | - | 247 | - | 247 | |
| SO2 | 1,779 | - | 1,779 | - | 1,925 | |
| H2SO4 | - | - | - | - | - | |
| S | 712 | 1,496 | 933 | - | 860 | |
| CO2 | 81 | - | 81 | - | 81 | |
| N-C8 | - | - | - | - | - | |
| Total | 3,060 | 1,496 | 3,281 | 73 | 3,354 | |

| Stream | K | L | M | N | O | P |
|---|---|---|---|---|---|---|
| T,°C | 750 | 175 | 120 | 25 | 120 | 120 |
| Kilograms/Hr | | | | | | |
| N2 | - | - | - | - | - | - |
| O2 | - | - | - | - | - | - |
| CH4 | - | - | - | - | - | - |
| H2S | 560 | 560 | - | - | - | - |
| H2O | 492 | 492 | 2,058 | 1,269 | - | - |
| SO2 | 527 | 527 | - | - | - | - |
| H2SO4 | - | - | - | - | - | - |
| S | 1,443 | 1,443 | - | - | 327 | 410 |
| CO2 | 743 | 743 | 743 | - | - | - |

| N-C8 | - | - | - | - | - | - |
|---|---|---|---|---|---|---|
| Total | 3,765 | 3,765 | 2,801 | 1,269 | 327 | 410 |

## Claims

1. A method of treating sulphuric acid comprising decomposing the sulphuric acid in the presence of fluid sulphur and oxygen to form a gaseous mixture comprising sulphur vapour, water vapour and sulphur dioxide, and then reacting the sulphur dioxide in the gaseous mixture with a reducing agent to form a sulphur product.

2. A method as claimed in claim 1, in which the reduction reaction takes place away from the decomposition reaction.

3. A method as claimed in claim 1 or claim 2, in which the amount of said fluid sulphur present is at least 150% of the stoichiometric amount required to react with oxygen to form sulphur dioxide.

4. A method as claimed in any one of the preceding claims, in which the decomposition of the sulphuric acid takes place in a flame at a temperature in the range of 600 to 1000°C.

5. A method as claimed in any one of claims 1 to 3, in which the decomposition of sulphuric acid takes place in a reaction region in which no flame is present.

6. A method as claimed in claim 5, in which the flameless reaction region is in the same vessel as a bath of boiling sulphur or in a vessel communicating with another vessel in which a bath of boiling sulphur is held.

7. A method as claimed in claim 6, in which the oxygen is passed into the volume of boiling sulphur and reacts therewith to form sulphur dioxide.

8. A method as claimed in any one of the preceding claims, in which the source of sulphuric acid is waste sulphuric acid, and additionally including the step of separating solids from the sulphuric acid.

9. A method as claimed in claim 8, in which the separation is formed by contacting the sulphuric acid with a bath of liquid sulphur.

10. A method as claimed in any one of the preceding claims, in which oxygen is introduced into the gaseous mixture and reacted with sulphur vapour to form sulphur dioxide intermediate the sulphuric acid decomposition region and the reduction region.

11. A method as claimed in any one of the preceding claims, in which the reducing agent comprises at least one product of a reaction between sulphur vapour and a hydrocarbon.

12. A method as claimed in claim 11, in which the hydrocarbon is an alkane.

13. A method as claimed in claim 11, in which the alkane is methane, and the products of its reaction with sulphur comprise carbon disulphide and hydrogen sulphide.

14. A method as claimed in any one of claims 11 to 13, in which the reaction of the hydrocarbon with sulphur vapour, and the reduction of sulphur dioxide are performed catalytically in a plurality of regions.

15. A method as claimed in claim 14, in which the gaseous mixture is reduced in temperature between catalytic regions by being mixed with liquid sulphur.

16. A method as claimed in claim 14 or claim 15, in which the reaction of the hydrocarbon with sulphur vapour and the reduction of sulphur dioxide are performed at temperatures in the range of 500 to 800°C.

17. A method as claimed in any one of claims 1 to 10, in which the reducing agent comprises hydrogen sulphide supplied from an external source thereof.

18. Apparatus for treating sulphuric acid comprising a first reactor for decomposing the sulphuric acid in the presence of fluid sulphur and oxygen to form a gas mixture comprising sulphur vapour, water vapour and sulphur dioxide, said first reactor having an inlet or inlets for the sulphur, oxygen and the sulphuric acid, and having an outlet for said gaseous mixture, and a second reactor for reacting the sulphur dioxide in the gaseous mixture with a reducing agent to form a sulphur product, said second reactor having an inlet communicating with the said outlet of the first reactor, an inlet for the reducing agent or a precursor(s) thereof, and an outlet for the sulphur product.

# FIG.1

# FIG.3

# FIG.4

FIG. 2

Fig. 5

**European Patent Office**

# EUROPEAN SEARCH REPORT

Application Number

EP 93 30 1530

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 649 446 (ALLIED CHEMICAL CORP.)<br>* Claim 1 *<br>--- | 1 | C 01 B 17/58<br>C 01 B 17/04 |
| A | US-A-2 389 071 (MERRIAM)<br>* Claim 1 *<br>--- | 1 | |
| A | US-A-2 066 896 (MERRIAM)<br>* Claim 9 *<br>--- | 1 | |
| A | EP-A-0 091 679 (ALLIED CORPORATION)<br>* Page 2, line 26 - line 36 *<br>--- | 1 | |
| A,D | EP-A-0 195 447 (AIR PRODUCTS AND CHEMICALS)<br>* Claim 1 *<br>--- | 1 | |
| A,D | EP-A-0 220 610 (AIR PRODUCTS AND CHEMICALS)<br>* Claim 1 *<br>----- | 1 | |
| | | | TECHNICAL FIELDS SEARCHED (Int. Cl.5)<br><br>C 01 B |

The present search report has been drawn up for all claims

| Place of search | Date of completion of the search | Examiner |
|---|---|---|
| BERLIN | 17-05-1993 | CLEMENT J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................
& : member of the same patent family, corresponding document

EPO FORM 1503 01.82 (P0401)